# EUROPEAN PATENT APPLICATION

(11) **EP 4 567 935 A1**
(43) Date of publication of application: **11.06.2025**
(21) Application number: 23907684.7
(22) Date of filing: 19.12.2023
(51) Int. Cl.: H01M 4/62, H01M 4/136, C08L 33/02, C08L 1/28, C08L 9/06, C08L 33/00, C08L 101/00, H01M 10/052, H01M 4/02

(54) **BINDER COMPOSITION FOR SECONDARY BATTERY ELECTRODES, AND POSITIVE ELECTRODE FOR LITHIUM-SULFUR SECONDARY BATTERY AND LITHIUM-SULFUR SECONDARY BATTERY COMPRISING SAME**

(30) Priority: 23.12.2022 KR 20220183530
(71) Applicant: LG Energy Solution, Ltd., Seoul 07335 (KR)
(72) Inventor: KIM, Bong-Soo, Daejeon 34122 (KR); AHN, Jee-Hyun, Daejeon 34122 (KR); NOH, Jae-Kyo, Daejeon 34122 (KR)
(74) Representative: Goddar, Heinz J.
(86) International application number: PCT/KR2023/020975
(87) International publication number: WO 2024/136399

(57) **Abstract**

Provided are a binder composition for a secondary battery electrode, a positive electrode for a lithium-sulfur battery and a lithium-sulfur secondary battery. The binder composition for a secondary battery electrode includes lithium-substituted polyacrylic acid, lithium-substituted carboxymethyl cellulose and a colloid particle-type aqueous binder resin and thus can provide improved adhesion force in an electrode while maintaining a high level of productivity and output performance.

## Description

### TECHNICAL FIELD

The present disclosure relates to a binder composition for a secondary battery, a positive electrode for a lithium-sulfur secondary battery including the same and a lithium-sulfur secondary battery.

The present application claims priority to Korean Patent Application No. 10-2022-0183530 filed on December 23, 2022 in the Republic of Korea, the disclosures of which are incorporated herein by reference.

### BACKGROUND ART

As the spectrum of application of lithium secondary batteries is extended to electric vehicles (EVs) and energy storage systems (ESSs) as well as portable electronic instruments, lithium sulfur batteries having high capacity, high energy density and long service life have been increasingly in demand.

Among such lithium secondary batteries, a lithium-sulfur battery is a battery system using a sulfur compound containing a sulfur-sulfur (S-S) bond as a positive electrode active material and a lithium metal as a negative electrode active material. Such a lithium-sulfur battery is advantageous in that sulfur as a main ingredient of the positive electrode active material has a small atomic weight, is rich in resources, is easy to supply and demand, has no toxicity and is eco-friendly. In addition, the lithium-sulfur battery shows higher capacity as compared to the other battery systems, and thus has been spotlighted among the secondary batteries developed to date.

Since sulfur used in the lithium-sulfur battery is a non-conductor having no electrical conductivity as determined by its conductivity of about 5 x 10⁻³⁰ S/cm and hardly allows migration of the electrons generated through the electrochemical reactions, a sulfur-containing material has been formed into a composite with a conductive material, such as carbon, capable of providing electrochemically reactive sites and used as a positive electrode active material.

Meanwhile, in the lithium-sulfur battery, while lithium as a negative electrode active material donates an electron and is ionized and oxidized into a lithium cation during discharge, a sulfur-based material as a positive electrode active material accepts the electron and is reduced. Herein, the S-S bond accepts two electrons through the reduction of the sulfur-based material and is converted into a sulfur anion form. The lithium cation produced by the oxidation of lithium is transferred to a positive electrode through an electrolyte, and is bound with the sulfur anion produced by the reduction of the sulfur-based compound to form a salt. Particularly, sulfur before discharge has a cyclic S₈ structure, which is converted into lithium polysulfide (Li₂Sₓ, wherein x = 8, 6, 4, 2) through the reduction and is reduced completely to produce lithium sulfide (Li₂S). However, lithium polysulfide formed during charge/discharge cycles is easily eluted to an electrolyte to cause a drop in battery capacity and degradation of a cell. To solve the problem of lithium polysulfide elution, sulfur has been supported in the pores of various porous carbonaceous materials to be used for a positive electrode.

However, since a sulfur-carbon composite including a porous carbonaceous material has low density and large surface area, a binder having high adhesion force is required for the application to a positive electrode. Under these circumstances, many studies have been conducted about various binders. However, it is difficult to improve the productivity and output performance simultaneously with the adhesion force.

### DISCLOSURE

### Technical Problem

The present disclosure is designed to solve the problems of the related art, and therefore the present disclosure is directed to providing a binder composition for a secondary battery electrode which can provide improved adhesion force in an electrode while maintaining a high level of productivity and output performance, a positive electrode for a lithium-sulfur secondary battery including the same and a lithium-sulfur secondary battery.

It will be easily understood that these and other objects and advantages of the present disclosure may be realized by the means shown in the appended claims and combinations thereof.

### Technical Solution

The inventors of the present disclosure have found that the above-mentioned problem can be solved by a binder composition for a secondary battery electrode, a positive electrode for a lithium-sulfur secondary battery including the same and a lithium-sulfur secondary battery as described hereinafter.

According to the first embodiment of the present disclosure, there is provided a binder composition for a secondary battery electrode, including a first binder resin, a second binder resin and a third binder resin, wherein the first binder resin is lithium-substituted polyacrylic acid, the second binder resin is lithium-substituted carboxymethyl cellulose, and the third binder resin is a colloid particle-type aqueous binder resin.

According to the second embodiment of the present disclosure, there is provided the binder composition for a secondary battery electrode as defined in the first embodiment, wherein the first binder resin includes at least one type of lithium-substituted polyacrylic acid, and the lithium-substituted polyacrylic acid has a weight average molecular weight (Mw) of 300,000-1,500,000.

According to the third embodiment of the present disclosure, there is provided the binder composition for a secondary battery electrode as defined in the first or the second embodiment, wherein the first binder resin includes at least two types of lithium-substituted polyacrylic acids having a different molecular weight.

According to the fourth embodiment of the present disclosure, there is provided the binder composition for a secondary battery electrode as defined in any one of the first to the third embodiments, wherein the second binder resin has a viscosity of 100-10,000 cP as determined from its 1.0% aqueous solution.

According to the fifth embodiment of the present disclosure, there is provided the binder composition for a secondary battery electrode as defined in any one of the first to the fourth embodiments, wherein the third binder resin is styrene butadiene rubber, acrylic polymer containing a repeating unit derived from at least one type of acrylic monomer, or a mixture thereof.

According to the sixth embodiment of the present disclosure, there is provided the binder composition for a secondary battery electrode as defined in any one of the first to the fifth embodiments, wherein each the first binder resin and the second binder resin has a pH ranging from 6 to 9 as determined from its 1.0-10.0% aqueous solution.

According to the seventh embodiment of the present disclosure, there is provided the binder composition for a secondary battery electrode as defined in any one of the first to the sixth embodiments, which further includes an aqueous binder resin as a fourth binder resin.

According to the eighth embodiment of the present disclosure, there is provided the binder composition for a secondary battery electrode as defined in any one of the first to the seventh embodiments, which includes 5-80 wt% of the first binder resin, 5-80 wt% of the second binder resin and 5-80 wt% of the third binder resin, based on 100 wt% of the total weight of the binder composition.

According to the ninth embodiment of the present disclosure, there is provided the binder composition for a secondary battery electrode as defined in any one of the first to the eighth embodiments, which includes the first binder resin and the second binder resin in an amount of 20-60 wt% based on 100 wt% of the total weight of the binder composition.

According to the tenth embodiment of the present disclosure, there is provided the binder composition for a secondary battery electrode as defined in any one of the first to the ninth embodiments, which includes the third binder resin in an amount of 30-75 wt% based on 100 wt% of the total weight of the binder composition.

According to the eleventh embodiment of the present disclosure, there is provided the binder composition for a secondary battery electrode as defined in any one of the first to the tenth embodiments, which includes 5-50 wt% of the first binder resin, 5-40 wt% of the second binder resin and 30-75 wt% of the third binder resin, based on 100 wt% of the total weight of the binder composition.

According to the twelfth embodiment of the present disclosure, there is provided a positive electrode for a lithium-sulfur secondary battery including a positive electrode current collector and a positive electrode active material layer formed on at least one surface of the positive electrode current collector, wherein the positive electrode active material layer includes a positive electrode active material and a binder resin, and the binder resin includes the binder composition for a secondary battery electrode as defined in any one of the first to the eleventh embodiments.

According to the thirteenth embodiment of the present disclosure, there is provided a lithium-sulfur secondary battery including the positive electrode as defined in the twelfth embodiment, a negative electrode, a separator interposed between the positive electrode and the negative electrode and an electrolyte.

### Advantageous Effects

According to the present disclosure, there is provided a binder composition for a secondary battery electrode having a novel composition. The binder composition for a secondary battery electrode includes lithium-substituted with polyacrylic acid, lithium-substituted carboxymethyl cellulose and a colloid particle-type aqueous binder resin, and shows excellent adhesion force while maintaining a high level of productivity and output performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a graph illustrating the test results of the adhesion force of Examples and Comparative Examples.
FIG. 2 is a graph illustrating the test results of the power density of Examples and Comparative Examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Unless otherwise stated, temperature is expressed in the unit of a Celsius degree (°C).

The present disclosure relates to binder composition for a secondary battery electrode, a positive electrode for a lithium-sulfur secondary battery including the same and a lithium-sulfur secondary battery.

### Electrode Binder Composition

In one aspect of the present disclosure, there is provided a binder composition for a secondary battery electrode, including a first binder resin, a second binder resin and a third binder resin, wherein the first binder resin is lithium-substituted polyacrylic acid, the second binder resin is lithium-substituted carboxymethyl cellulose, and the third binder resin is a colloid particle-type aqueous binder resin. The binder composition for a secondary battery electrode according to the present disclosure includes a specific combination of the first binder resin and the second binder resin capable of contributing to improvement of processability with the third binder resin capable of contributing to improvement of adhesion force, and thus can provide excellent adhesion force while maintaining a high level of productivity and output performance. In addition, it is possible to ensure optimized battery power and high adhesion force at the same time depending on the mixing ratio of the first binder resin favorable to output with the second binder resin having the interfacial properties allowing efficient adhesion of the third binder resin. The electrode binder composition according to the present disclosure may be applied to a negative electrode and/or a positive electrode. Particularly, there is no limitation in the type of electrode as long as an aqueous solvent can be applied to the manufacture of an electrode.

The first binder resin is lithium-substituted polyacrylic acid.

Lithium-substituted polyacrylic acid is a form in which the hydrogen of carboxyl group (COOH) of polyacrylic acid is substituted with lithium. Such lithium-substituted polyacrylic acid may be formed through neutralization reaction by introducing a lithium-containing base to polyacrylic acid. Herein, lithium-substituted polyacrylic acid may be formed preferably through the complete neutralization of polyacrylic acid by introducing the base at a molar ratio of 1:1 of the carboxyl group in polyacrylic acid to lithium. For example, lithium-substituted polyacrylic acid may be formed by neutralizing polyacrylic acid with LiOH to a pH of 6-9, or 6.5-8. If polyacrylic acid is not completely neutralized, side reactions may occur due to the hydrogen generated from polyacrylic acid. In addition, when an excessive amount of base is introduced, the life characteristics of a battery may be degraded by the base not participating in the neutralization reaction. Such lithium substitution causes an increase in polarity of polyacrylic acid and improvement of dispersibility thereof in a solvent. Such lithium-substituted polyacrylic acid not only functions as a binder capable of increasing the adhesion of electrode active materials and/or adhesion between an electrode active material and an electrode current collector but also can improve the stability of an electrode by inhibiting the side reaction products formed during the operation of a battery.

As used herein, 'pH' may be determined by a pH titration method or by using a potentiometric pH meter used conventionally in the art. Particularly, pH may be determined by using a pH meter including a glass electrode (e.g. Metter Toleo SevenExellence pH meter). In addition, in the case of a sample in a solid form, not aqueous solution, 0.5-20 g of a solid sample is mixed with 100 g of distilled water, the mixture is agitated for 10 minutes, and then pH may be determined at room temperature (25°C).

According to an embodiment of the present disclosure, the first binder resin includes at least one type of lithium-substituted polyacrylic acid, and the lithium-substituted polyacrylic acid my have a weight average molecular weight of 300,000-1,500,000. When lithium-substituted polyacrylic acid having the above-defined range of weight average molecular weight is used, it is possible to improve the adhesion force and productivity of an electrode.

When at least two types of lithium-substituted polyacrylic acids are used, they are different from each other in terms of molecular weight. Particularly, at least one, at least two or at least three types of lithium-substituted polyacrylic acids may be used.

When at least two types of lithium-substituted polyacrylic acids are used, lithium-substituted polyacrylic acid having a relatively larger molecular weight may contribute to an increase in adhesion force of the binder and improvement of the life of a battery, and lithium-substituted polyacrylic acid having a relatively smaller molecular weight may contribute to an increase in solid content in preparing a slurry and improvement of the processability of the binder by increasing the flowability of a slurry. Therefore, the binder composition according to the present disclosure may include one type of lithium-substituted polyacrylic acid having a relatively larger molecular weight and one type of lithium-substituted polyacrylic acid having a relatively smaller molecular weight as at least two types of lithium-substituted polyacrylic acids.

Herein, the weight average molecular weight (Mw) may be determined as a conversion value for standard polystyrene measured by gel permeation chromatography (GPC). Particularly, the weight average molecular weight may be determined by GPC as described in the method of ASTM D5296. For example, the following GPC conditions may be suggested.
GPC instrument: ACQUITY APC (Waters Co.)
Column: PL gel Mixed-B + C (Agilent)
Column Temperature: RT (20-25°C)
Eluent: DMF/0.05 M LiBr
Flow rate: 1.0 mL/min
Detector: Waters 2414 RI detector
Sample Concentration: ~1 mg/mL (0.45µm syringe filter)
Injection amount: 10 µL
Calibration Curve: Polystyrene
The second binder resin is lithium-substituted carboxymethyl cellulose.

Lithium-substituted carboxymethyl cellulose can provide excellent adhesion to the surface of an electrode current collector as well as an electrode active material. In addition, lithium-substituted carboxymethyl cellulose can function as a dispersant in the binder composition, and particularly can improve the dispersibility of a positive electrode active material when it is mixed with the positive electrode active material. Further, lithium-substituted carboxymethyl cellulose can improve the stability of a slurry by virtue of high thickening capability.

Such lithium-substituted carboxymethyl cellulose may be formed through neutralization reaction by introducing a lithium-containing base to carboxymethyl cellulose and then washed, or may be formed by bonding a lithium ion directly to carboxymethyl cellulose. For example, in the case of neutralization reaction, lithium-substituted carboxymethyl cellulose may be formed preferably through the complete neutralization of carboxymethyl cellulose by introducing the base at a molar ratio of 1:1 of carboxymethyl cellulose to lithium. For example, lithium-substituted carboxymethyl cellulose may be formed by neutralizing carboxymethyl cellulose with LiOH to a pH of 6-9, or 6.5-8. If carboxymethyl cellulose is not completely neutralized, Li⁺ ion conductivity may be decreased or the reversibility of a lithium negative electrode may be decreased due to the H⁺, Na⁺ ions, or the like, remaining in carboxymethyl cellulose, and thus the performance of a battery may be degraded. In addition, when an excessive amount of base is introduced, the life characteristics of a battery may be degraded by the base not participating in the neutralization reaction. Such lithium substitution causes an increase in Li⁺ ion conductivity of carboxymethyl cellulose and removes the other cations, thereby preventing degradation of the performance of a battery caused by the other cations. Such lithium-substituted carboxymethyl cellulose not only functions as a binder capable of increasing the adhesion of electrode active materials and/or adhesion between an electrode active material and an electrode current collector but also can improve the stability of an electrode by inhibiting the side reaction products formed during the operation of a battery. Further, as compared to carboxymethyl cellulose not substituted with lithium, lithium-substituted carboxymethyl cellulose may show an effect similar to pre-lithiation which can supplement lithium consumed in advance in the electrode during the operation of a battery, and thus can enhance the initial efficiency and improve the battery performance.

As used herein, 'pH' may be determined by a pH titration method or by using a potentiometric pH meter used conventionally in the art. Particularly, pH may be determined by using a pH meter including a glass electrode (e.g. Metter Toleo SevenExellence pH meter). In addition, in the case of a sample in a solid form, not aqueous solution, 0.5-20 g of a solid sample is mixed with 100 g of distilled water, the mixture is agitated for 10 minutes, and then pH may be determined at room temperature (25°C).

The second binder resin may have a viscosity of 100-10,000 cP. Particularly, the second binder resin may have the above-defined range of viscosity as determined from its 1.0% aqueous solution. When lithium-substituted carboxymethyl cellulose having the above-defined range of viscosity is used, it is possible to ensure desired adhesion force and dispersibility. When using the second binder resin having a lower level of viscosity within the above-defined range, it is possible to ensure further improved dispersibility. In addition, when using the second binder resin having a higher level of viscosity within the above-defined range, it is possible to obtain further improved adhesion force.

As used herein, 'viscosity' means a value determined at a given temperature (25°C) by using a viscometer used conventionally for determining the viscosity of a fluid, such as a B-type viscometer (VISCOMETER, TOKIMEC), rheometer (TA instruments), or the like. For example, the viscosity may be determined preferably by using a B-type viscometer at a temperature of 25°C under a shear rate of 12 rpm.

The third binder resin is a colloid particle-type aqueous binder resin.

The colloid particle-type aqueous binder resin exists in the state of particles not dissolved in an aqueous binder composition, and thus can inhibit an increase in viscosity of the dissolved polymer and binder composition and can function as a binder capable of increasing the adhesion of electrode active materials and/or adhesion between an electrode active material and an electrode current collector.

The colloid particle-type aqueous binder resin exists in a state dispersed in an aqueous solvent, is not dissolved therein and is dispersed stably in the state of particles having a shape similar to a spherical shape and an average particle diameter (D₅₀) of 50-500 nm. The average particle diameter (D₅₀) may refer to a particle diameter at a point of 50% in the particle number accumulated distribution depending on particle diameter.

The colloid particle-type aqueous binder resin may be styrene butadiene rubber, an acrylic polymer containing a repeating unit derived from at least one type of acrylic monomer, or a mixture thereof.

Any acrylic polymer may be used with no particular limitation, as long as it contains a repeating unit derived from at least one type of acrylic monomer. For example, the acrylic polymer may be one derived from one type of acrylic monomer, or a copolymer containing a repeating unit derived from at least two types of acrylic monomers.

The acrylic monomer may include acrylic acid, alkyl acrylate, alkyl methacrylate, isoalkyl (meth)acrylate, or the like, wherein the term 'alkyl' may be a C1-C10 alkyl group, particularly a C1-C5 alkyl group. Particular examples of the acrylic monomer may include methyl (meth)acrylate, ethyl (meth)acrylate, propyl (meth)acrylate, butyl (meth)acrylate, pentyl (meth)acrylate, or the like. Preferably, the acrylic polymer may include an acrylic copolymer containing repeating units derived from acrylic acid and butyl (meth)acrylate as acrylic monomers.

In the electrode binder composition according to an embodiment of the present disclosure, each of the first binder resin, the second binder resin and the third binder resin may be used in the amount as described hereinafter.

Particularly, the first binder resin may be used in an amount of 5-80 wt%, particularly 5-50 wt%, or 12.5-45 wt%, based on 100 wt% of the total weight of the electrode binder composition. When the first binder resin is used within the above-defined range, it is possible to inhibit sedimentation of a positive electrode active material and to prevent an increase in battery resistance caused by excessive addition of the binder.

The second binder resin may be used in an amount of 5-80 wt%, particularly 5-40 wt%, or 5-37.5 wt%, based on 100 wt% of the total weight of the electrode binder composition. When the second binder resin is used within the above-defined range, it is possible to provide excellent adhesion of positive electrode active materials and/or adhesion between a positive electrode active material and a positive electrode current collector and to prevent an increase in battery resistance caused by excessive addition of the binder.

The third binder resin may be used in an amount of 5-80 wt%, particularly 30-75 wt%, or 40-65 wt%, based on 100 wt% of the total weight of the electrode binder composition. When the third binder resin is used within the above-defined range, it is possible to inhibit sedimentation of a positive electrode active material, to provide excellent adhesion of positive electrode active materials and/or adhesion between a positive electrode active material and a positive electrode current collector and to prevent an increase in battery resistance caused by excessive addition of the binder.

**In** addition, the first binder resin and the second binder resin may be used in an amount of 20-60 wt%, or 40-60 wt%, based on 100 wt% of the total weight of the electrode binder composition. When the combined weight of the first binder resin and the second binder resin falls within the above-defined range, it is possible to inhibit sedimentation of a positive electrode active material, to provide excellent adhesion of positive electrode active materials and/or adhesion between a positive electrode active material and a positive electrode current collector and to prevent an increase in battery resistance caused by excessive addition of the binder.

When all of the content of the first binder resin, that of the second binder resin and that of the third binder resin satisfy the above-defined ranges, it is possible to realize improved adhesion force in an electrode, to provide improved battery performance, and to manufacture a positive electrode having a non-excessive and suitable weight. Therefore, it is possible to provide balanced cell energy density, which is favorable to the capacity of a battery.

According to an embodiment of the present disclosure, the electrode binder composition according to the present disclosure may further include an aqueous binder resin as a fourth binder resin.

The fourth binder resin is different from each of the first to the third binder resins. For example, the fourth binder resin may include carboxymethyl cellulose (CMC), hydroxymethyl cellulose, hydroxyethyl cellulose, hydroxypropyl cellulose, polyethylene glycol, polyacrylonitrile, polyacrylamide, polyvinyl alcohol, polyethylene oxide, or a mixture or copolymer thereof.

### Positive Electrode for Lithium-Sulfur Battery

In another aspect of the present disclosure, there is provided a positive electrode for a lithium-sulfur battery, including a positive electrode current collector and a positive electrode active material layer formed on at least one surface of the positive electrode current collector, wherein the positive electrode active material layer includes a positive electrode active material and a binder resin.

The positive electrode active material may be used in an amount of 50-99 wt% based on 100 wt% of the positive electrode active material layer.

The binder resin includes the above-described electrode binder composition. Particularly, the binder resin may be the above-described electrode binder composition. The binder resin may be used in an amount of 0.5-10 wt%, or 1-5 wt%, based on 100 wt% of the positive electrode active material layer.

The positive electrode current collector is for supporting the positive electrode active material and is not particularly limited as long as it has high conductivity while not causing any change in a battery. In general, the positive electrode current collector may have a thickness of 3-500 µm and may include a conductive material, such as stainless steel, aluminum, copper or titanium. When using a carbon-coated aluminum substrate, there are advantages in that it shows excellent adhesion force to a positive electrode active material, has low contact resistance and can prevent corrosion of aluminum caused by polysulfide. In addition, the positive electrode current collector may have various shapes, such as a film, a sheet, a foil, a mesh, a net, a porous body, a foam, a nonwoven web, or the like.

The positive electrode active material may include at least one selected from the group consisting of sulfur-based materials, particularly sulfur (S₈) and sulfur compounds. The sulfur-based materials may include inorganic sulfur (S₈), Li₂Sₙ (n ≥ 1), disulfide compounds, such as 2,5-dimercapto-1,3,4-thiadiazole, 1,3,5-trithiocyanuric acid, etc., organic sulfur compounds and carbon-sulfur polymers ((C₂Sₓ)ₙ, x = 2.5-50, n ≥ 2). Preferably, the positive electrode active material may include inorganic sulfur (S₈).

Since sulfur contained in the positive electrode active material has no electrical conductivity in itself, it is used in combination with a conductive material, such as a carbonaceous material. Therefore, the positive electrode active material may be a sulfur-carbon composite, and the sulfur-carbon composite may include a sulfur-based material.

Carbon contained in the sulfur-carbon composite is a porous carbonaceous material, provides a framework capable of fixing sulfur uniformly and stably, and compensates for the low conductivity of sulfur to allow smooth progress of electrochemical reactions.

In general, the porous carbonaceous material may be prepared by carbonizing various carbonaceous precursors. The porous carbonaceous material may include nonuniform pores therein, the pores may have an average diameter of 1-200 nm, and the porosity may be 10-90% based on the total volume of the porous carbonaceous material. When the average diameter of the pores is smaller than the above-defined range, the pore size is merely at a molecular level, thereby making impregnation with sulfur impossible. On the contrary, when the average diameter of the pores is larger than the above-defined range, the porous carbonaceous material has low mechanical strength, which is not favorable to application to a process for manufacturing an electrode.

The porous carbonaceous material may have a spherical, rod-like, needle-like, sheet-like, tubular or bulk shape, and any porous carbonaceous material may be used with no particular limitation, as long as it is used conventionally for a lithium-sulfur battery.

The porous carbonaceous material may have a porous structure or high specific surface area, and any carbonaceous material used conventionally in the art may be used. Particular examples of the porous carbonaceous material include: graphite; graphene; carbon black, such as denka black, acetylene black, ketjen black, channel black, furnace black, lamp black, thermal black, or the like; carbon nanotubes (CNTs), such as single-walled carbon nanotubes (SWCNTs), multi-walled carbon nanotubes (MWCNTs), or the like; carbon fibers, such as graphite nanofibers (GNFs), carbon nanofibers (CNFs), activated carbon fibers, or the like; graphite, such as natural graphite, artificial graphite, expandable graphite, or the like; and activated carbon, but is not limited thereto. Preferably, the porous carbonaceous material may be carbon nanotubes.

The sulfur-carbon composite may include a sulfur-based material in an amount of 60-90 wt%, preferably 65-85 wt%, and more preferably 70-80 wt%, based on 100 wt% of the sulfur-carbon composite.

When the content of the sulfur-based material is smaller than the above-defined range, the content of the porous carbonaceous material in the sulfur-carbon composite is increased relatively and the specific surface area thereof is increased, thereby causing an increase in use of the binder as compared to the sulfur content in manufacturing a positive electrode. Such an increase in use of the binder ultimately causes an increase in sheet resistance of the positive electrode and functions as an insulator blocking the passage of electrons, resulting in degradation of the performance of a battery. On the contrary, when the content of the sulfur-based material is larger than the above-defined range, sulfur that cannot be bound with the porous carbonaceous material causes aggregation or is leached again to the surface of the porous carbonaceous material, thereby making it difficult to accept electrons and to participate in electrochemical reactions, resulting in a drop in battery capacity.

In addition, sulfur in the sulfur-carbon composite is disposed in at least one position of the inner surface and outer surface of the porous carbonaceous material, wherein sulfur may be present at a ratio of less than 100%, preferably 1-95%, and more preferably 60-90%, based on the total inner and outer surface area of the porous carbonaceous material. When sulfur is present on the inner surface and outer surface of the porous carbonaceous material within the above-defined range, it is possible to realize the highest effect in terms of electron transfer area and wettability with an electrolyte. Particularly, since the inner surface and outer surface of the porous carbonaceous material are impregnated with sulfur thinly and uniformly within the above-defined range, it is possible to increase the electron transfer contact area during charge/discharge. When sulfur is disposed at 100% over the total inner surface and outer surface of the porous carbonaceous material, the carbonaceous material is completely covered with sulfur to provide poor wettability with an electrolyte and to make the contact with the conductive materials contained therein defective, and thus the electrode cannot accept electrons and cannot participate in electrochemical reactions.

The method for preparing the sulfur-carbon composite is not particularly limited, and any conventional method known to those skilled in the art may be used. For example, a method, including simply mixing sulfur with a porous carbonaceous material and carrying out heat treatment to form a composite, may be used.

The positive electrode active material may further include at least one selected from transition metal elements, Group IIIA elements, Group IVA elements, sulfur compounds of those elements, alloys of sulfur with those elements, and at least one additive selected from the above-described ingredients.

The transition metals may include Sc, Ti, V, Cr, Mn, Fe, Co, Ni, Cu, Zn, Y, Zr, Nb, Mo, Tc, Ru, Rh, Pd, Os, Ir, Pt, Au, Hg, or the like, Group IIIA elements may include Al, Ga, In, Ti, or the like, and Group IVA elements may include Ge, Sn, Pb, or the like.

In addition, sulfur may be used in an amount of 40-95 wt%, preferably 50-90 wt%, and more preferably 60-85 wt%, based on 100 wt% of the positive electrode active material layer forming a positive electrode. According to an embodiment of the present disclosure, when a sulfur-carbon composite is used as a positive electrode active material, the sulfur-carbon composite may be used in an amount of 90-97 wt% based on 100 wt% of the positive electrode active material layer. When the content of the positive electrode active material is smaller than the above-defined range, it is not possible for the positive electrode to realize electrochemical reactions. On the contrary, when the content of the positive electrode active material is larger than the above-defined range, the content of the conductive material and binder as described hereinafter is insufficient relatively to cause an increase in resistance of the positive electrode and degradation of the physical properties of the positive electrode.

The positive electrode for a lithium-sulfur battery may be obtained by applying a positive electrode slurry including the positive electrode active material and the binder resin onto a positive electrode current collector.

According to an embodiment of the present disclosure, the positive electrode slurry may have a solid content of 20-50 wt%. As used herein, the term 'solid content' may refer to solid ingredients in a slurry except the solvent, or the like.

The positive electrode slurry may further include conventionally used ingredients, such as additives, if necessary, in order to improve the quality thereof. Particular examples of such additives are generally known in the art, and detailed description thereof will be omitted herein.

The method for applying the positive electrode slurry is not particularly limited. For example, a doctor blade process, a die casting process, a comma coating process, a screen printing process, or the like, may be used. **In** addition, the positive electrode slurry may be applied onto the positive electrode current collector through a pressing or lamination process, after being formed on a separate substrate.

After the positive electrode slurry is applied, a drying step may be carried out to remove the solvent. The drying step is carried out under such conditions of temperature and time that the solvent is removed sufficiently, and the conditions may vary depending on the particular type of the solvent and are not limited particularly. Particular examples of the drying method include a drying process using warm air, hot air or low-humidity air, a vacuum drying process and a drying process based on (far infrared ray) radiation or electron beam irradiation. The drying rate may be controlled generally in such a manner that the solvent may be removed as rapidly as possible while not causing cracking of the positive electrode active material layer and separation of the positive electrode active material layer from the positive electrode current collector resulting from the concentration of stress.

**In** addition, after the drying step, the current collector may be pressurized to increase the density of the positive electrode active material in the positive electrode. Particular examples of the pressurization method include mold pressing, roll pressing, or the like.

### Lithium-Sulfur Battery

In still another aspect of the present disclosure, there is provided a lithium-sulfur battery including a positive electrode, a negative electrode, a separator interposed between the positive electrode and the negative electrode, and an electrolyte, wherein the positive electrode is the same as described above.

Any negative electrode may be used with no particular limitation, as long as it may be used conventionally as a negative electrode for a lithium-sulfur battery. Particularly, the negative electrode may be a lithium-based metal and may further include a current collector on one surface of the lithium-based metal. The current collector may include a negative electrode current collector.

The lithium-based metal may be lithium or a lithium alloy. Herein, the lithium alloy includes an element capable of forming an alloy with lithium. Particular examples of the alloy include alloys of lithium with at least one element selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

Herein, the lithium-based metal may have a sheet- or foil-like shape. Optionally, the lithium-based metal may be provided in the form of a current collector on which lithium or a lithium alloy is deposited or coated through a dry process, or a particle-shaped metal or alloy is deposited or coated through a wet process.

The negative electrode current collector is not particularly limited, as long as it has high conductivity while not causing any chemical change in the corresponding battery, and may be selected from the group consisting of copper, aluminum, stainless steel, zinc, titanium, silver, palladium, nickel, iron, chromium, alloys thereof and combinations thereof. Herein, stainless steel may be surface-treated with carbon, nickel, titanium or silver, and the alloy may include aluminum-cadmium alloy. Besides the above-listed current collectors, baked carbon, a non-conductive polymer surface-treated with a conductive material, conductive polymer, or the like, may also be used. In general, copper foil may be used as a negative electrode current collector. In addition, the negative electrode current collector may have various shapes, such as a film optionally having fine surface irregularities, a sheet, a foil, a net, a porous body, a foam, a nonwoven web, or the like. Further, the negative electrode current collector may have a thickness of 3-50 µm. When the thickness of the negative electrode current collector is smaller than 3 µm, it is not possible to obtain a sufficient current collection effect. On the other hand, when the thickness of the negative electrode current collector is larger than 50 µm, there is a problem in that processability is degraded when the cell is assembled by a folding process.

According to an embodiment of the present disclosure, any electrolyte may be used with no particular limitation, as long as it may be used as an electrolyte for a lithium-sulfur battery. Particularly, the electrolyte may include an organic solvent and a lithium salt.

The organic solvent functions as a medium through which ions participating in the electrochemical reactions of a battery can pass. Any organic solvent used conventionally for a lithium secondary battery electrolyte may be used with no particular limitation. For example, ether compounds, ester compounds, amide compounds, linear carbonate compounds, cyclic carbonate compounds, or the like, may be used alone or in combination. Typically, an ether-based compound may be used.

The ether-based compound may include an acyclic ether and a cyclic ether. For example, the acyclic ether may be at least one selected from the group consisting of dimethyl ether, diethyl ether, dipropyl ether, methyl ethyl ether, methyl propyl ether, ethyl propyl ether, dimethoxyethane, diethoxyethane, ethylene glycol methyl ethyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glyocol methyl ethyl ether, polyethylene glycol dimethyl ether, polyethylene glycol diethyl ether and polyethylene glycol methyl ethyl ether. For example, the cyclic ether may be at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene and isosorbide dimethyl ether, furan, 2-methylfuran, 3-methylfuran, 2-ethylfuran, 2-butylfuran, 2,3-dimethylfuran, 2,4-dimethylfuran, 2,5-dimetylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene. However, the scope of the present disclosure is not limited thereto.

Particular examples of the ester of the organic solvents include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, ε-caprolactone, and a mixture of two or more of them. However, the scope of the present disclosure is not limited thereto.

Particular examples of the linear carbonate compound include any one selected from the group consisting of dimethyl carbonate (DMC), diethyl carbonate (DEC), dipropyl carbonate, ethyl methyl carbonate (EMC), methyl propyl carbonate, ethyl propyl carbonate, and a mixture of two or more of them. However, the scope of the present disclosure is not limited thereto.

In addition, particular examples of the cyclic carbonate include ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, halides thereof, or a mixture of two or more of them. Particular examples of the halides include, but are not limited to: fluoroethylene carbonate (FEC), or the like.

The lithium salt is a compound capable of providing lithium ions in the electrolyte. Particular examples of the lithium salt include LiPF₆, LiClO₄, LiAsF₆, LiBF₄, LiSbF₆, LiAlO₄, LiAlCl₄, LiCF₃CO₂, LiCF₃SO₃, LiC₄F₉SO₃, LiN(C₂F₅SO₃)₂, LiCH₃SO₃, LiN(C₂F₅SO₂)₂, LiN(CF₃SO₂)₂, LiC₄BO₈, LiCl, LiBr, LiB₁₀Cl₁₀, LiI, LiB(C₂O₄)₂, or the like. According to the present disclosure, with a view to increasing the availability of sulfur and realizing a high-capacity and high-voltage battery, the lithium salt may be Li-TFSI preferably. More preferably, the lithium salt may include LiN(CF₃SO₂)₂ (Li-TFSI) in an amount of 80 wt% or more, or 90 wt% or more, or 100%, based on 100 wt% of the total lithium salt.

The lithium salt may have a concentration of 0.1-2.0 M, preferably 0.5-1 M, and more preferably 0.5-0.75 M. When the concentration of lithium salt falls within the above-defined range, the electrolyte has a suitable level of conductivity and viscosity, and thus the electrolyte can realize excellent performance and lithium ions can be transported effectively. When the concentration of lithium salt is lower than the above-defined range, it is difficult to ensure ion conductivity suitable for driving a battery. When the concentration of lithium salt is higher than the above-defined range, the electrolyte has increased viscosity to cause degradation of lithium-ion transportability or an increase in decomposition of the lithium salt itself, resulting in degradation of the performance of a battery.

Besides the above-mentioned ingredients forming the electrolyte, the electrolyte may further include additives in order to improve the life characteristics of a battery, to inhibit a decrease in battery capacity and to improve the discharge capacity of a battery. Particular examples of such additives include nitrate compounds, nitrite compounds, haloalkylene carbonate compound, such as difluoroethylene carbonate, pyridine, triethyl phosphite, triethanolamine, cyclic ether, ethylene diamine, n-glyme, hexamethylphosphoric acid triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethanol or aluminum trichloride, and such additives may be used alone or in combination. The additives may be used in an amount of 0.1-10 wt%, preferably 0.1-5 wt%, based on the total weight of the electrolyte.

According to an embodiment of the present disclosure, the electrolyte may include a nitrate compound and/or a nitrite compound as an additive. Such a nitrate compound/nitrite compound has the effects of forming a stable coating film on a negative electrode, i.e. lithium metal electrode and improving charge/discharge efficiency. Particular examples of such a nitrate or nitrite compound include at least one selected from the group consisting of inorganic nitrate or nitrite compounds, such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₃), cesium nitrite (CsNO₂), ammonium nitrite (NH₄NO₂), or the like; organic nitrate or nitrite compounds, such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite, or the like; organic nitro compounds, such as nitromethane, nitropropane, nitrobutane, nitrobenzene, dinitrobenzene, nitropyridine, dinitropyridine, nitrotoluene, dinitrotoluene, or the like; and combinations thereof. However, the scope of the present disclosure is not limited thereto. According to a preferred embodiment of the present disclosure, the additive may include lithium nitrate.

According to an embodiment of the present disclosure, the separator is disposed in an electrode assembly in such a manner that it is interposed between the negative electrode and the positive electrode. The separator functions to separate the negative electrode from the positive electrode and to provide a lithium-ion transport channel. Any separator that may be used conventionally as a separator for a lithium-sulfur battery may be used with no particular limitation. Particularly, the separator may include a porous polyolefin substrate. If necessary, the separator may further include inorganic particles and/or a binder for binding the inorganic particles on at least one surface of the porous polyolefin substrate.

In addition, the separator may be a film-like electrolyte membrane including a solid electrolyte, and may further include a binder for binding the solid electrolyte, if necessary. Any solid electrolyte, such as a polymeric solid electrolyte, an inorganic solid electrolyte or a combination thereof, which may be used conventionally for a lithium-sulfur battery, may be used with no particular limitation.

According to an embodiment of the present disclosure, the outer shape of the lithium-sulfur battery may be a coin-like shape, a cylindrical shape, a pouch-like shape or a prismatic shape with no particular limitation. **In** addition, the lithium-sulfur battery may be used not only for a battery cell used as a power source of a compact device but also for a unit cell in a middle- or large-scale battery module including a plurality of battery cells, and the application thereof is not particularly limited.

According to an embodiment of the present disclosure, the lithium-sulfur battery using the positive electrode including the above-described sulfur-carbon composite can realize an excellent effect in terms of the energy density of a battery, but the scope of the present disclosure is not limited thereto. According to the lithium sulfur battery of the present disclosure, the loading amount of sulfur in the electrode is increased and the amount of the electrolyte is decreased, thereby providing significantly improved energy density. However, the effects of the present disclosure are not limited thereto.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### <Examples>

### Example 1

### 1) Manufacture of Positive Electrode

First, the first polyacrylic acid (weight average molecular weight 450,000) was mixed with the second polyacrylic acid (weight average molecular weight 1,250,000), and then the resultant mixture was neutralized completely with lithium hydroxide to obtain lithium-substituted polyacrylic acid as the first binder resin.

The lithium-substituted polyacrylic acid was mixed with lithium-substituted carboxymethyl cellulose (available from LG Chem) as the second binder resin and acryl colloid (acrylate copolymer available from LG Chem) as the third biner resin to prepare a binder composition. The weight ratio of the first binder resin, the second binder resin and the third binder resin is shown in the following Table 1.

In addition, sulfur (available from Sigma-Aldrich) was mixed with carbon nanotubes (CNTs) by using a ball mill at a mixing ratio of 70:30, and then the resultant mixture was heat treated at 155°C to obtain a sulfur-carbon composite as a positive electrode active material.

The binder composition and the positive electrode active material were added to water as a solvent at a ratio of 4:96 and mixed therein to prepare a positive electrode slurry. Then, the resultant positive electrode slurry was applied to an aluminum foil as a current collector and dried at 50°C for 2 hours to obtain a positive electrode having a loading amount of 3 mAh/cm².

### 2) Manufacture of Lithium-Sulfur Battery

A lithium foil having a thickness of about 40 µm was used as a negative electrode.

A polyethylene porous membrane (thickness: about 9 µm, porosity: about 40-50%) was used as a separator.

As an electrolyte, used was a mixed solution including 1 M lithium bis(trifluoromethyane sulfonyl)imide (LiTFSI) and 1 wt% of lithium nitrate (LiNO₃) dissolved in an organic solvent containing dioxolane (DOL) and dimethyl ether (DME) at a volume ratio of 1:1.

The resultant positive electrode and negative electrode were disposed in such a manner that they might face each other, the separator was interposed between both electrodes, and the electrolyte was injected to obtain a lithium-sulfur battery.

### Examples 2-5 and Comparative Examples 1-7

A lithium-sulfur battery was obtained in the same manner as Example 1, except that the weight ratio of binder resins was varied as shown in Table 1 in manufacturing a positive electrode.

However, in the case of Comparative Example 2, the binder composition and the positive electrode active material were added to water as a solvent at a ratio of 1:99, followed by mixing, to prepare a positive electrode slurry. In the case of Comparative Examples 4 and 5, the binder composition and the positive electrode active material were added to water as a solvent at a ratio of 3:97 and 2.5:97,5, respectively, followed by mixing, to prepare a positive electrode slurry.

### Examples 6 and 7 and Comparative Examples 8-10

A lithium-sulfur battery was obtained in the same manner as Example 1, except that styrene butadiene rubber was used as the third binder resin and the weight ratio of binder resins was varied as shown in Table 1 in manufacturing a positive electrode.

**[Table 1]**

| | First binder resin (wt%) | Second binder resin (wt%) | Third binder resin (wt%) |
|---|---|---|---|
| Example 1 | 45 | 5 | 50 |
| Example 2 | 42.5 | 7.5 | 50 |
| Example 3 | 37.5 | 12.5 | 50 |
| Example 4 | 25 | 25 | 50 |
| Example 5 | 12.5 | 37.5 | 50 |
| Example 6 | 37.5 | 12.5 | 50 |
| Example 7 | 12.5 | 37.5 | 50 |
| Comparative Example 1 | 100 | 0 | 0 |
| Comparative Example 2 | 0 | 100 | 0 |
| Comparative Example 3 | 50 | 0 | 50 |
| Comparative Example 4 | 0 | 33 | 67 |
| Comparative Example 5 | 0 | 20 | 80 |
| Comparative Example 6 | 50 | 50 | 0 |
| Comparative Example 7 | 0 | 0 | 100 |
| Comparative Example 8 | 50 | 0 | 50 |
| Comparative Example 9 | 0 | 50 | 50 |
| Comparative Example 10 | 50 | 50 | 0 |

### Determination of Weight Average Molecular Weight

The weight average molecular weight of each of the first binder resin and the second binder resin used in Examples and Comparative Examples was determined by using the instrument under the conditions as described hereinafter.
GPC instrument: ACQUITY APC (Waters Co.)
Column: PL gel Mixed-B + C (Agilent)
Column Temperature: RT (20-25°C)
Eluent: DMF/0.05M LiBr
Flow rate: 1.0 mL/min
Detector: Waters 2414 RI detector
Sample Concentration: ~1 mg/mL (0.45µm syringe filter)
Injection amount: 10 µL
Calibration Curve: Polystyrene

### Performance Test

### 1. Method for Determination of Adhesion Force

An electrode dried at 50°C for 2 hours was cut into a size of 15 cm x 2 cm, the electrode surface was adhered to slide glass having a double-sided tape attached thereto, and lamination was carried out to obtain a sample for a peel test.

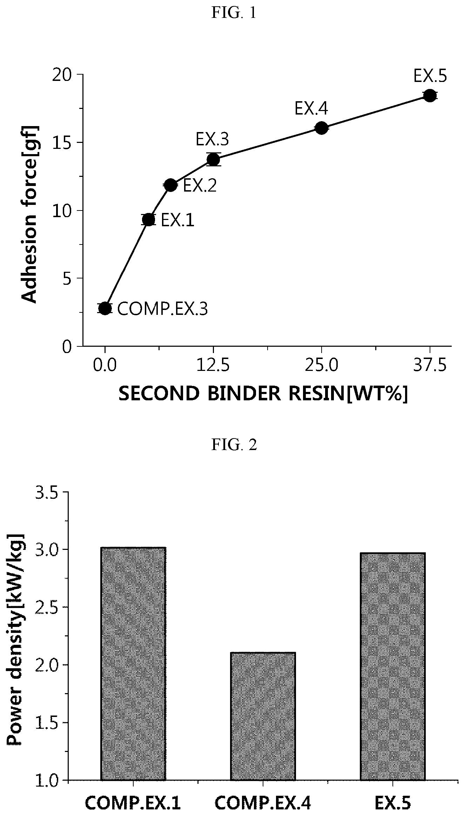

The sample for a peel test was loaded to a UTM capable of determining adhesion force, and the adhesiveness of each electrode was determined by carrying out a 90° peel test to measure the peel resistance (gf). The results of determination of adhesion force are shown in the following Table 2, and the results of determination of adhesion force depending on the content of lithium-substituted carboxymethyl cellulose as the second binder resin are shown in FIG. 1.

### <Analysis Conditions>

- Sample width: 20 mm
- Propagation speed: 300 mm/min
- Data effective calculation range: 10-40 mm

### 2. Power Density

The battery according to each of Examples and Comparative Examples was used to obtain a 5 Ah pouch cell, and the maximum power per weight was measured.

The maximum power that can be discharged at the lower limit voltage or higher for 10 seconds at a point where the battery power is the lowest was calculated, and the lowest output point in the lithium-sulfur battery used herein was a point of SOC (state of charge) 75. After applying 5.0 C 10 sec discharge pulses at this point, the cell resistance was conversed to calculate the maximum power at the lower limit voltage, 1.5 V, and the calculated value was divided by the battery weight to calculate the maximum power (power density) per weight.

FIG. 2 is a graph illustrating the results of determination of power density of each of Example 5 and Comparative Examples 1 and 4 using a different content of the second binder resin.

**[Table 2]**

| | Adhesion force (gf) | Power density (Kw/kg) |
|---|---|---|
| Example 1 | 9.3 | 3.05 |
| Example 2 | 11.9 | 2.98 |
| Example 3 | 13.8 | 3.01 |
| Example 4 | 16.0 | 3.01 |
| Example 5 | 18.4 | 2.96 |
| Example 6 | 14.7 | 2.67 |
| Example 7 | 15.7 | 2.72 |
| Comparative Example 1 | 3.9 | 3.06 |
| Comparative Example 2 | 6.7 | 2.49 |
| Comparative Example 3 | 2.8 | 2.95 |
| Comparative Example 4 | 16.0 | 2.08 |
| Comparative Example 5 | - (not available due to slurry sedimentation) | - |
| Comparative Example 6 | 5.4 | 3.05 |
| Comparative Example 7 | - (not available due to slurry sedimentation) | - |
| Comparative Example 8 | 3.5 | - |
| Comparative Example 9 | 21.5 | 1.78 |
| Comparative Example 10 | 10.8 | - |

Referring to Table 1 and Table 2, only when all of the three types of the binder resins are combined, it is possible to provide excellent adhesion force and power density with no sedimentation phenomenon.

It can be seen from Table 1 that adhesion force increases as the content of the second binder resin increases.

It can be also seen from Table 2 and FIG. 2 that Comparative Example 1 including the first binder resin alone ensures a high level of power density but is difficult to ensure adhesion force, and Comparative Example 4 containing the second binder resin in an excessive amount while not containing the first binder resin causes a decrease in power density even though it ensures adhesion force. In addition, in the case of Comparative Example 5 containing the third binder resin at an excessively high ratio, slurry sedimentation occurs.

## Claims

1. A binder composition for a secondary battery electrode, comprising a first binder resin, a second binder resin and a third binder resin,
wherein the first binder resin is lithium-substituted polyacrylic acid,
the second binder resin is lithium-substituted carboxymethyl cellulose, and
the third binder resin is a colloid particle-type aqueous binder resin.

2. The binder composition for a secondary battery electrode according to claim 1, wherein the first binder resin comprises at least one type of lithium-substituted polyacrylic acid, and the lithium-substituted polyacrylic acid has a weight average molecular weight (Mw) of 300,000-1,500,000.

3. The binder composition for a secondary battery electrode according to claim 2, wherein the first binder resin comprises at least two types of lithium-substituted polyacrylic acids having a different molecular weight.

4. The binder composition for a secondary battery electrode according to claim 1, wherein the second binder resin has a viscosity of 100-10,000 cP as determined from its 1.0% aqueous solution.

5. The binder composition for a secondary battery electrode according to claim 1, wherein the third binder resin is styrene butadiene rubber, acrylic polymer containing a repeating unit derived from at least one type of acrylic monomer, or a mixture thereof.

6. The binder composition for a secondary battery electrode according to claim 1, wherein each the first binder resin and the second binder resin has a pH ranging from 6 to 9 as determined from its 1.0-10.0% aqueous solution.

7. The binder composition for a secondary battery electrode according to claim 1, which further comprises an aqueous binder resin as a fourth binder resin.

8. The binder composition for a secondary battery electrode according to claim 1, which comprises 5-80 wt% of the first binder resin, 5-80 wt% of the second binder resin and 5-80 wt% of the third binder resin, based on 100 wt% of the total weight of the binder composition.

9. The binder composition for a secondary battery electrode according to claim 1, which comprises the first binder resin and the second binder resin in an amount of 20-60 wt% based on 100 wt% of the total weight of the binder composition.

10. The binder composition for a secondary battery electrode according to claim 1, which comprises the third binder resin in an amount of 30-75 wt% based on 100 wt% of the total weight of the binder composition.

11. The binder composition for a secondary battery electrode according to claim 1, which comprises 5-50 wt% of the first binder resin, 5-40 wt% of the second binder resin and 30-75 wt% of the third binder resin, based on 100 wt% of the total weight of the binder composition.

12. A positive electrode for a lithium-sulfur secondary battery comprising a positive electrode current collector and a positive electrode active material layer formed on at least one surface of the positive electrode current collector, wherein the positive electrode active material layer comprises a positive electrode active material and a binder resin, and the binder resin comprises the binder composition for a secondary battery electrode as defined in any one of claims 1 to 11.

13. A lithium-sulfur secondary battery comprising the positive electrode as defined in claim 12, a negative electrode, a separator interposed between the positive electrode and the negative electrode and an electrolyte.
